# EUROPEAN PATENT APPLICATION

(11) **EP 4 641 696 A1**
(43) Date of publication of application: **29.10.2025**
(21) Application number: 22969889.9
(22) Date of filing: 30.12.2022
(51) Int. Cl.: H01M 4/62, H01M 4/13, H01M 10/0525

(54) **ELECTRODE, SECONDARY BATTERY, AND ELECTRIC DEVICE**

(71) Applicant: Ningde Amperex Technology Limited, Ningde, Fujian 352100 (CN)
(72) Inventor: CHENG, Wenqiang, Ningde, Fujian 352100 (CN); CAI, Xiaohu, Ningde, Fujian 352100 (CN); HAN, Dongdong, Ningde, Fujian 352100 (CN); WANG, Kefei, Ningde, Fujian 352100 (CN)
(74) Representative: Icosa
(86) International application number: PCT/CN2022/144359
(87) International publication number: WO 2024/138749

(57) **Abstract**

Embodiments of the present application provide an electrode, a secondary battery, and an electric device. The electrode includes: an electrode active material layer, where the electrode active material layer has an areal density of 8 mg/cm² to 40 mg/cm², and a thickness H of 25 µm to 80 µm. The electrode active material layer, in mass percentage, includes 95% to 99.3% of an electrode active material and 0.2% to 5% of a conductive agent, where the conductive agent includes carbon nanotube clusters and discrete carbon nanotubes, the carbon nanotube clusters being composed of a plurality of carbon nanotube units arranged in bundles, and the carbon nanotube clusters having a diameter greater than 0.2 µm. The electrode achieves high energy density while maintaining good electrical conductivity and ionic conductivity, reducing electrode polarization and improving the rate performance of the battery cell.

## Description

### TECHNICAL FIELD

The present application relates to the field of battery technology, and more specifically, to an electrode, a secondary battery, and an electric device.

### BACKGROUND

Lithium-ion batteries are widely used in digital electronic products, energy storage systems, drones, electric tools, and electric vehicles due to their characteristics such as high energy density, long cycle life, high safety, and fast charging capability. As the demand for thinner and lighter products becomes increasingly urgent, batteries are required to have progressively higher energy density. Increasing the areal density of electrode surface coatings to thicken the electrode, thereby reducing the amount of positive and negative electrode substrates and separators, is one of the methods employed in the industry to enhance energy density. However, as electrode thickness increases, the lithium-ion transport path lengthens, the conductive network becomes insufficient, and both ionic conductivity and electrical conductivity decrease significantly, leading to increased polarization and, consequently, poor rate performance of the battery cell.

Therefore, improving the rate performance of thick electrodes is a problem that needs to be addressed in this field.

### SUMMARY

The present application provides an electrode, a secondary battery, and an electric device, where the electrode maintains good ionic conductivity and electrical conductivity even under conditions of high areal density, thereby enabling the battery cell to exhibit excellent rate performance.

A first aspect of the present application provides an electrode that includes an electrode active material layer, where the electrode active material layer has an areal density C.W of 8 mg/cm² to 40 mg/cm² and a thickness H of 25 µm to 80 µm,
where the electrode active material layer, in mass percentage, includes 95% to 99.3% of an electrode active material and 0.2% to 5% of a conductive agent,
where the conductive agent includes carbon nanotube clusters and discrete carbon nanotubes, the carbon nanotube clusters being composed of a plurality of carbon nanotube units arranged in bundles, and the carbon nanotube clusters having a diameter greater than 0.2 µm.

According to the present application, the energy density of the battery cell is increased by enhancing the areal density and a thickness of the electrode active material layer in the electrode. In addition, carbon nanotube clusters and discrete carbon nanotubes are used as the conductive agent. These carbon nanotube clusters and discrete carbon nanotubes work synergistically to form a stable conductive network. The carbon nanotube clusters primarily form long-range conductive pathways, while the discrete carbon nanotubes further collect microcurrents from the electrode active material. Together, they enable the electrode to exhibit good electrical conductivity. Additionally, the conductive network formed by this conductive agent enhances the wettability of the electrolyte within the active material layer, thereby improving the ionic conductivity of the electrode. As a result, the thick electrode achieves high energy density while maintaining good electrical conductivity and ionic conductivity, reducing electrode polarization and improving the rate performance of the battery cell.

In some embodiments of the present application, an average diameter d of the carbon nanotube units satisfies 3 nm ≤ d ≤ 40 nm; and
optionally, the average diameter d of the carbon nanotube units satisfies 5 nm ≤ d ≤ 20 nm.

In some embodiments of the present application, the carbon nanotube units are multi-walled carbon nanotube units.

In some embodiments of the present application, an average diameter D of the carbon nanotube clusters is ≥ 0.5 µm; and
optionally, the average diameter D of the carbon nanotube clusters satisfies 0.5 µm ≤ D ≤ 3 µm.

In some embodiments of the present application, an average length L of the carbon nanotube clusters is ≥ 3 µm;
optionally, the average length L of the carbon nanotube clusters is ≥ 5 µm; and
optionally, the average length L of the carbon nanotube clusters satisfies 5 µm ≤ L ≤ 30 µm.

In some embodiments of the present application, a mass ratio of the carbon nanotube clusters to the discrete carbon nanotubes is from 1:0.01 to 1.

In some embodiments of the present application, the conductive agent further includes a third conductive agent, the third conductive agent being selected from carbon black and/or graphene, and a mass ratio of the carbon nanotube clusters to the third conductive agent is from 1:0.01 to 1.

In some embodiments of the present application, the electrode active material layer, in mass percentage, further includes 0.5% to 3% of a binder.

In some embodiments of the present application, a weight-average molecular weight Mw of the binder is from 700,000 to 2,800,000; and
optionally, the weight-average molecular weight Mw of the binder is from 1,100,000 to 2,200,000.

In some embodiments of the present application, a number-average molecular weight Mn of the binder and the weight-average molecular weight Mw of the binder satisfy: 1.5 ≤ Mw/Mn ≤ 3; and
optionally, the number-average molecular weight Mn of the binder and the weight-average molecular weight Mw of the binder satisfy: 2.1 ≤ Mw/Mn ≤ 2.4.

In some embodiments of the present application, the electrode active material layer, in mass percentage, includes 0.2% to 2% of the conductive agent, 0.5% to 1.5% of the binder, and 96.5% to 99.3% of the electrode active material; and
optionally, the electrode active material layer, in mass percentage, includes 0.5% to 1% of the conductive agent, 0.7% to 1.3% of the binder, and 97.7% to 98.8% of the electrode active material.

In some embodiments of the present application, a melting point T₁ of the binder is from 160°C to 185°C; and/or
a thermal decomposition temperature T₂ of the binder is from 460°C to 495°C; and
optionally, the melting point T₁ of the binder is from 172°C to 180°C; and/or
the thermal decomposition temperature T₂ of the binder is from 480°C to 490°C.

In some embodiments of the present application, a compacted density P.D of the electrode active material layer is from 3.8 mg/cm³ to 4.3 mg/cm³; and
optionally, the compacted density P.D of the electrode active material layer is from 3.95 mg/cm³ to 4.15 mg/cm³.

In some embodiments of the present application, Dv99 of the electrode active material and the thickness H of the electrode active material layer satisfy 0.6 ≤ H/Dv99 ≤ 3; and
optionally, the Dv99 of the electrode active material and the thickness H of the electrode active material layer satisfy 1 ≤ H/Dv99 ≤ 1.8.

A second aspect of the present application provides a secondary battery including: a positive electrode, a negative electrode, a separator, and an electrolyte;
where at least one of the positive electrode or the negative electrode is an electrode according to any embodiment of the first aspect.

In some embodiments of the present application, the positive electrode is an electrode according to any embodiment of the first aspect.

A third aspect of the present application provides an electric device including: the secondary battery according to any embodiment of the second aspect.

### DESCRIPTION OF DRAWINGS

To describe the technical solutions in embodiments of the present application more clearly, the following briefly describes the accompanying drawings required for describing embodiments of the present application. Apparently, the accompanying drawings in the following description show merely some embodiments of the present application, and a person of ordinary skill in the art may still derive other drawings from the accompanying drawings without creative efforts.
FIG. 1 is a low-magnification scanning electron microscope image of an electrode provided by an embodiment of the present application.
FIG. 2 is a high-magnification scanning electron microscope image of an electrode provided by an embodiment of the present application.

### DETAILED DESCRIPTION

To make the objectives, technical solutions, and advantages of embodiments of the present application clearer, the following clearly describes the technical solutions in embodiments of the present application with reference to the accompanying drawings in embodiments of the present application. Apparently, embodiments described are some rather than all embodiments of the present application. All other embodiments obtained by a person of ordinary skill in the art based on embodiments of the present application without creative efforts shall fall within the protection scope of the present application.

Unless otherwise defined, all technical and scientific terms used in the present application shall have the same meanings as commonly understood by those skilled in the art to which the present application relates. The terms used in the specification of the present application are intended to merely describe the specific embodiments rather than to limit the present application. The terms "include", "comprise", "have", and any variations thereof in the specification and claims of the present application as well as the foregoing description of drawings are intended to cover non-exclusive inclusions. In the specification, claims, or accompanying drawings of the present application, the terms "first", "second", and the like are intended to distinguish between different objects rather than to describe a particular order or a primary-secondary relationship.

Reference to "embodiment" in the present application means that specific features, structures, or characteristics described with reference to the embodiment may be included in at least one embodiment of the present application. The word "embodiment" appearing in various positions in the specification does not necessarily refer to the same embodiment or an independent or alternative embodiment that is exclusive of other embodiments.

In the description of the present application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in the present application as appropriate to specific situations.

The term "and/or" in the present application is only an associative relationship for describing associated objects, indicating that three relationships may be present. For example, A and/or B may indicate the following three cases: presence of only A; presence of both A and B; and presence of only B. In addition, the character "/" in the present application generally indicates an "or" relationship between contextually associated objects.

In embodiments of the present application, the same reference signs denote the same members. For brevity, in different embodiments, detailed descriptions of the same members are not repeated. It should be understood that, as shown in the accompanying drawings, sizes such as thickness, length, and width of various members and sizes such as thickness, length, and width of integrated devices in embodiments of the present application are merely for illustrative purposes and should not constitute any limitations on the present application.

In the present application, "a plurality of" means more than two (inclusive).

The battery cell in the present application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in embodiments of the present application. The battery cell may be cylindrical, flat, cuboid, or of other shapes, which is not limited in embodiments of the present application either.

As described in the background, one effective method to increase the energy density of a battery cell is to increase the areal density of the electrode active material layer. However, since the compacted density of the electrode active material layer cannot be excessively high, the most direct approach is to increase the thickness of the electrode active material layer. The drawback of a thick electrode, however, is that conventional conductive agents cannot form a stable conductive network within it, resulting in poor electrical conductivity of the thick electrode. Additionally, a thicker electrode increases the ion transport distance, leading to reduced ionic conductivity. Consequently, in the prior art, thick electrodes suffer from poor electrical conductivity and ionic conductivity, which increases polarization and reduces rate performance.

In response, the inventors, after thorough consideration and extensive experimentation, have provided a thick electrode that uses carbon nanotube clusters with a diameter greater than 0.2 µm and discrete carbon nanotubes as the conductive agent. This conductive agent can form a stable conductive network within the electrode active material layer, while also enhancing the wettability of the electrolyte in the electrode, thereby enabling the thick electrode to exhibit good electrical conductivity and ionic conductivity. When applied in a secondary battery, this reduces the impact of polarization in thick electrodes on the battery cell, allowing the secondary battery to achieve good rate performance.

### Electrode

A first aspect of the present application provides an electrode that includes an electrode active material layer, where the electrode active material layer has an areal density C.W of 8 mg/cm² to 40 mg/cm² and a thickness H of 25 µm to 80 µm,
where the electrode active material layer, in mass percentage, includes 95% to 99.3% of an electrode active material and 0.2% to 5% of a conductive agent,
where the conductive agent includes carbon nanotube clusters and discrete carbon nanotubes, the carbon nanotube clusters being composed of a plurality of carbon nanotube units arranged in bundles, and the carbon nanotube clusters having a diameter greater than 0.2 µm.

According to the present application, the energy density of the battery cell is increased by enhancing the areal density and thickness of the electrode active material layer in the electrode. In addition, with the carbon nanotube clusters and discrete carbon nanotubes used as the conductive agent, the carbon nanotube clusters and discrete carbon nanotubes can work synergistically to form a stable conductive network. The carbon nanotube clusters primarily form long-range conductive pathways, while the discrete carbon nanotubes can further collect microcurrents from the electrode active material. Together, they enable the electrode to exhibit good electrical conductivity. Additionally, the conductive network formed by this conductive agent can enhance the wettability of the electrolyte, thereby improving the ionic conductivity of the electrode. As a result, the thick electrode achieves high energy density while maintaining good electrical conductivity and ionic conductivity, reducing electrode polarization and improving the rate performance of the battery cell.

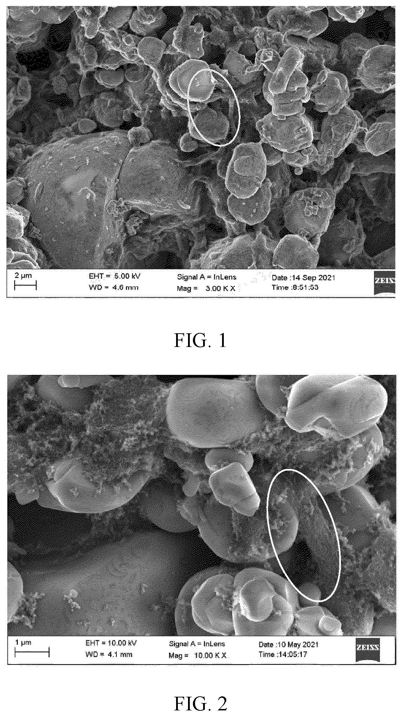

In the context of the present application, "carbon nanotube cluster" refers to a structure composed of multiple carbon nanotube units arranged in bundles and bonded together, where the long axes of the carbon nanotube units are parallel to each other and the diameter of the structure is greater than 0.2 µm. As shown in FIGs. 1 and 2, which are scanning electron microscope images of the electrode at different magnifications in some embodiments of the present application. FIG. 1 clearly shows the presence of the aforementioned carbon nanotube clusters in the electrode, while FIG. 2 shows that these carbon nanotube clusters are composed of multiple carbon nanotube units arranged in bundles and bonded together. "Discrete carbon nanotube" refers to a structure consisting of a single carbon nanotube unit or multiple carbon nanotube units bonded together with a diameter significantly less than 0.2 µm. Prior to the present application, carbon nanotubes had been used as a conductive agent in electrode active material layers. Due to their extremely high aspect ratio and specific surface area, carbon nanotubes tend to agglomerate easily. Thus, conventional carbon nanotube raw materials are typically provided in the form of aggregates. According to teachings prior to the present application, to leverage the conductive properties of carbon nanotubes, carbon nanotubes are required to be uniformly dispersed in the electrode active material layer as individual carbon nanotube units. To achieve this, a dispersion of carbon nanotube conductive agent in a dispersant is typically prepared under dispersion conditions that ensure the carbon nanotube units are fully dispersed in the dispersant, such that carbon nanotube clusters are either not formed or are minimally formed (in other words, even if clusters similar to those provided in the present application are unintentionally formed, their content is very low). This carbon nanotube conductive agent dispersion is then thoroughly mixed with the electrode active material and other additives to form an electrode active material slurry, which is subsequently applied and dried to form the electrode active material layer. As described above, in the electrode active material layer formed this way, the carbon nanotubes are essentially uniformly dispersed as individual carbon nanotube units in the electrode active material layer, functioning as discrete carbon nanotubes to provide conductivity, with no or virtually no presence (in other words, even if carbon nanotube clusters similar to those provided in the present application are unintentionally formed, their mass percentage in the electrode active material layer would not meet the requirements of the present application) of carbon nanotube clusters with a diameter greater than 0.2 µm.

According to the present application, the areal density C.W of the electrode active material layer in the electrode is controlled to be 8 mg/cm² to 40 mg/cm², and the thickness H is controlled to be 25 µm to 80 µm. A thicker electrode active material layer can accommodate more electrode active material, thereby reducing the amount of positive and negative electrode substrates and separators used in the battery cell, thus increasing energy density.

The carbon nanotube clusters contained in the conductive agent have a diameter greater than 0.2 µm and possess high mechanical strength, enabling them to form a stable conductive network within the electrode active material layer. Whether the carbon nanotube units constituting the carbon nanotube clusters are single-walled or multi-walled carbon nanotubes, they are not easily affected by volume changes of the active material during the charging and discharging processes of the battery cell. Additionally, the conductive network can suppress volume changes of the electrode active material during charging and discharging, thereby preventing cracks in the electrode active material. Even if cracks occur in the electrode active material, the carbon nanotube clusters can bridge the cracks to connect the electrode active material, ensuring the normal pathway of the conductive network. Furthermore, carbon nanotube clusters with a larger diameter are less prone to bending or entanglement during dispersion in the electrode active material slurry. Due to their high strength, they are also less likely to break, resulting in a stable long-range conductive network that provides the electrode with good electrical conductivity. If the diameter of the carbon nanotube clusters is too small, their high flexibility may cause them to agglomerate in the electrode active material slurry or wrap around the surface of the electrode active material, thereby hindering the formation of a long-range conductive network and affecting the electrical conductivity of the electrode.

According to the present application, the conductive agent further includes discrete carbon nanotubes, which are preferably single-chain carbon nanotubes. Single-chain carbon nanotubes may include single-chain single-walled carbon nanotubes or single-chain multi-walled carbon nanotubes, with single-chain single-walled carbon nanotubes being most preferred. Since the primary role of the carbon nanotube clusters in the conductive agent is to form a stable long-range conductive network, facilitating electron conduction between the current collector and the electrode active material, as well as between particles of the electrode active material of the electrode. However, high strength of the carbon nanotube clusters makes them less prone to bending or entanglement, this limits their ability to collect microcurrents from the electrode active material. By further incorporating discrete carbon nanotubes into the conductive agent, their high aspect ratio and excellent flexibility allow them to make closer contact with the electrode active material, facilitating the collection of microcurrents from the electrode active material and stabilizing the connection between the electrode active material and the long-range conductive network. Thus, the conductive network composed of the short-range conductive pathways formed by the discrete carbon nanotubes and the long-range conductive network formed by the carbon nanotube clusters, can effectively enhance the electrical conductivity of the thick electrode.

The present application does not specify limitations on the specifications of the discrete carbon nanotubes. For example, the average diameter of the discrete carbon nanotubes may range from 1 nm to 50 nm, and the average length may range from 1 µm to 100 µm. Discrete carbon nanotubes with a high aspect ratio offer better flexibility and improved efficiency in collecting microcurrents from the electrode active material.

It is worth mentioning that highly flexible discrete carbon nanotubes, such as single-chain single-walled carbon nanotubes, can wrap around the surface of the electrode active material, which can not only collect microcurrents but also significantly suppress volume changes of the electrode active material during charging and discharging, enhancing the stability of the conductive network.

On the other hand, since the aforementioned conductive agent provides good electrical conductivity, a relatively small amount added to the electrode active material layer can form an effective conductive network, thereby increasing the content of the electrode active material in the electrode active material layer and further enhancing the energy density of the electrode. However, while increasing the amount of conductive agent in the electrode active material layer improves electrical conductivity, excessive addition is not advisable. This is because an excessively high amount reduces the relative content of the electrode active material. Additionally, due to the high strength of the carbon nanotube clusters and their formation of a conductive network in the electrode active material layer, an excessive amount added can first make it difficult to apply the electrode active material slurry and also lead to an overly high strength of the electrode active material layer, making subsequent processing of the electrode, such as winding, less feasible. Therefore, in the technical solution of the present application, the mass percentage of the conductive agent in the electrode active material layer is controlled to be 0.2% to 5%. For example, the mass percentage of the carbon nanotube clusters in the electrode active material layer may be 0.2%, 0.3%, 0.4%, 0.5%, 1%, 1.5%, 2%, 2.5%, 3%, 3.5%, 4%, 4.5%, 5%, or within a range formed by any of the aforementioned values.

In terms of the ionic conductivity of the electrode, since the aforementioned conductive agent can form a stable conductive network, it can suppress the detachment of the electrode active material from the current collector, improve electrode adhesion, and reduce the amount of binder required, or even eliminate the need for a binder. This enhances the wettability of the electrolyte, thereby improving the ionic conductivity of the electrode.

In the present application, the areal density C.W and thickness H of the electrode active material layer have meanings well-known in the art and can be measured using methods and instruments known in the art.

In some embodiments, an average diameter d of the carbon nanotube units satisfies 3 nm ≤ d ≤ 40 nm. For example, the average diameter of the carbon nanotube units may be 3 nm, 4 nm, 5 nm, 8 nm, 10 nm, 12 nm, 14 nm, 16 nm, 18 nm, 20 nm, 25 nm, 30 nm, 35 nm, 40 nm, or within a range formed by any of the aforementioned values.

In some of the aforementioned embodiments, the carbon nanotube clusters are formed by carbon nanotube units bonded to each other. When the average diameter of the carbon nanotube units is too small, during the preparation of the carbon nanotube clusters, the carbon nanotube units are relatively soft, making them prone to agglomeration and entanglement with other carbon nanotube units, which makes it difficult to obtain carbon nanotube clusters with sufficient strength and a diameter greater than 0.2 µm. Conversely, when the average diameter of the carbon nanotube units is too large, the carbon nanotube units are prone to deformation or even breakage during the preparation of the carbon nanotube clusters, making it challenging to achieve the carbon nanotube cluster length required to form a long-range conductive network, or even preventing the formation of carbon nanotube clusters altogether. Therefore, an average diameter d of the carbon nanotube units in the carbon nanotube clusters satisfies 3 nm ≤ d ≤ 40 nm, with a preferred range of 5 nm ≤ d ≤ 20 nm.

It should be noted that, unless otherwise specified, the average diameter d of the carbon nanotube units in the carbon nanotube clusters as described in the present application refers to the average value of the diameters of the first 100 carbon nanotube units with larger diameters and the last 100 carbon nanotube units with larger diameters in observation of the prepared electrode by using a scanning electron microscope (SEM).

In some embodiments, the carbon nanotube units are multi-walled carbon nanotube units. Single-walled carbon nanotubes can be described as seamless hollow cylindrical tubes formed by rolling a single graphene sheet, typically with a diameter of 1 nm to 2 nm. Single-walled carbon nanotubes with larger diameters lead to structural instability and an increased number of defects. Additionally, the length of single-walled carbon nanotubes is generally on the micrometer scale, resulting in a very high aspect ratio and strong flexibility. During the preparation of carbon nanotube clusters, this flexibility makes them highly prone to agglomeration and entanglement, making it difficult to obtain carbon nanotube clusters with a diameter greater than 0.2 µm. Furthermore, the inventors have found that carbon nanotube clusters composed of single-walled carbon nanotube units, when applied in the electrode active material slurry, tend to entangle with other carbon nanotube clusters or the surface of the electrode active material, thereby affecting the electrical conductivity of the electrode. In contrast, multi-walled carbon nanotubes can be regarded as concentric arrangements of single-walled carbon nanotubes, that is, tubular structures seamlessly rolled from multiple graphene sheets. They generally have a larger diameter and possess a certain degree of strength, making them less prone to bending, twisting, kinking, or buckling. As a result, they are less likely to agglomerate or entangle, facilitating the preparation of carbon nanotube clusters with a diameter greater than 0.2 µm. Additionally, carbon nanotube clusters composed of multi-walled carbon nanotube units more readily form a conductive network in the electrode active material layer, enhancing the electrical conductivity of the electrode. Therefore, in some embodiments of the present application, carbon nanotube clusters formed by bonding multi-walled carbon nanotube units are preferably used as the conductive agent.

It is also worth mentioning that the production process for single-walled carbon nanotubes is more complex than that for multi-walled carbon nanotubes, resulting in lower yields and higher costs compared to multi-walled carbon nanotubes. Using multi-walled carbon nanotube units to form carbon nanotube clusters can effectively reduce costs.

In some embodiments, an average diameter D of the carbon nanotube clusters is ≥ 0.5 µm. For example, the average diameter of the carbon nanotube clusters may be 0.5 µm, 1 µm, 1.5 µm, 2 µm, 2.5 µm, 3 µm, 3.5 µm, or within a range formed by any of the aforementioned values.

In the electrode active material layer, when the average diameter D of the carbon nanotube clusters is ≥ 0.5 µm, their strength is high, and they are less likely to entangle with other carbon nanotube clusters or the electrode active material. This enables the formation of a long-range conductive network. Moreover, carbon nanotube clusters with a larger diameter can effectively mitigate the impact of volume changes in the electrode active material on the conductive network, ensuring that the conductive network remains highly efficient during the charging and discharging processes of the battery cell. This results in smooth electron conduction, reduced polarization, and improved electrical performance.

Further preferably, the average diameter D of the carbon nanotube clusters satisfies 0.5 µm ≤ D ≤ 3 µm. This is because if the diameter of the carbon nanotube clusters is too large, agglomeration may occur, requiring the addition of more carbon nanotube clusters to ensure uniform dispersion in the electrode active material layer to form a conductive network, which could affect the energy density of the electrode. Therefore, the diameter of the carbon nanotube clusters should not be excessively large.

It should be noted that, unless otherwise specified, the average diameter D of the carbon nanotube clusters as described in the present application refers to the average value of the diameters of the first 100 carbon nanotube clusters with larger diameters and the last 100 carbon nanotube clusters with larger diameters, in observation of the prepared electrode by using an SEM.

In some embodiments, an average length L of the carbon nanotube clusters is ≥ 3 µm. For example, the average length of the carbon nanotube clusters may be 3 µm, 4 µm, 5 µm, 6 µm, 7 µm, 8 µm, 9 µm, 10 µm, 12 µm, 14 µm, 16 µm, 18 µm, 20 µm, 25 µm, 30 µm, or within a range formed by any of the aforementioned values.

In some of the aforementioned embodiments, to form a long-range conductive network in the electrode active material layer, the average length of the carbon nanotube clusters may be ≥ 3 µm. It should be noted that, for those skilled in the art, the average length of the carbon nanotube clusters can be adjusted according to the thickness of the electrode active material layer and the particle size of the electrode active material. Generally, a longer average length facilitates the formation of a long-range conductive network. Thus, a more preferred average length L of the carbon nanotube clusters is ≥ 5 µm. However, if the average length is too long, agglomeration may occur, potentially leading to particle scratches or stable electrode protrusions during electrode preparation, which is detrimental to further processing and utilization of the electrode. Therefore, most preferable, the range for the average length L of the carbon nanotube clusters satisfies 5 µm ≤ L ≤ 30 µm.

It should be noted that, unless otherwise specified, the average length L of the carbon nanotube clusters as described in the present application refers to the average value of the lengths of the first 100 carbon nanotube clusters with longer lengths and the last 100 carbon nanotube clusters with longer lengths in observation of the prepared electrode by using an SEM.

In some embodiments, a mass ratio of the carbon nanotube clusters to the discrete carbon nanotubes is from 1:0.01 to 1. For example, the mass ratio of the carbon nanotube clusters to the discrete carbon nanotubes may be 1:0.01, 1:0.05, 1:0.1, 1:0.2, 1:0.3, 1:0.4, 1:0.5, 1:0.6, 1:0.7, 1:0.8, 1:0.9, 1:1, or within a range formed by any of the aforementioned values.

In some of the aforementioned embodiments, the mass ratio of the carbon nanotube clusters to the discrete carbon nanotubes in the conductive agent is specifically defined. A conductive agent meeting this condition forms a conductive network that can ensure both stable long-range conductive pathways and effective collection of microcurrents from the electrode active material, resulting in good electrical conductivity for the electrode. Further preferably, the mass ratio of the carbon nanotube clusters to the discrete carbon nanotubes may range from 1:0.1 to 0.5.

In some embodiments, the conductive agent may further include a third conductive agent, where the third conductive agent may be selected from carbon black and/or graphene, and a mass ratio of the carbon nanotube clusters to the third conductive agent may range from 1:0.01 to 1. For example, the mass ratio of the carbon nanotube clusters to the third conductive agent may be 1:0.01, 1:0.05, 1:0.1, 1:0.2, 1:0.3, 1:0.4, 1:0.5, 1:0.6, 1:0.7, 1:0.8, 1:0.9, 1:1, or within a range formed by any of the aforementioned values.

In some of the aforementioned embodiments, the third conductive agent may be further added to the conductive agent, where the third conductive agent may be carbon black and/or graphene. The addition of carbon black can work synergistically with the discrete carbon nanotubes to improve the efficiency of collecting microcurrents from the electrode active material, further reducing electrode resistance and suppressing damage to the electrode active material during electrode winding. The addition of graphene can form a more compact conductive network with the carbon nanotube clusters and discrete carbon nanotubes, improving the compacted density of the electrode and further enhancing its electrical conductivity. In an embodiment, the mass ratio of the carbon nanotube clusters to the third conductive agent in the conductive agent is further defined, ensuring that the addition of the third conductive agent achieves the aforementioned effects without compromising the ability of the carbon nanotube clusters to form a complete long-range conductive network. Further preferably, the mass ratio of the carbon nanotube clusters to the third conductive agent may range from 1:0.1 to 0.5.

The present application does not impose specific limitations on the specifications of carbon black or graphene. Those skilled in the art can select carbon black and graphene known in the prior art as conductive agents based on needs and actual conditions. Specifically, the average particle size Dv50 of carbon black may range from 1 nm to 500 nm, with a preferred range of 10 nm to 250 nm. Dv50 has a meaning well-known in the art, indicating that 50% of the particles in a volume-based particle size distribution have a particle size smaller than this value. Dv50 can be measured using methods and instruments known in the art, such as the laser diffraction method for particle size distribution per GB/T 19077-2016, using a laser particle size analyzer (for example, Malvern Mastersizer 2000E, UK). The average thickness of graphene may range from 0.3 nm to 300 nm, with a preferred range of 1 nm to 50 nm. In electrodes observed by SEM, the average thickness corresponds to the average value of the thicknesses of the first 100 graphene layers with greater thickness and the last 100 graphene layers with lesser thickness.

The electrode provided in the present application may include a current collector. The present application does not impose limitations on the current collector, which may be a metal foil, a porous metal plate, or a composite current collector. The composite current collector may include a polymer material base layer and a metal layer formed on at least one surface of the polymer material base layer. The composite current collector may be formed by depositing a metal material (for example, copper, copper alloy, nickel, nickel alloy, titanium, titanium alloy, silver, silver alloy, and the like) onto a polymer material substrate (for example, a substrate made of polypropylene (PP), polyethylene terephthalate (PET), polybutylene terephthalate (PBT), polystyrene (PS), polyethylene (PE), and the like). As an example, when the electrode is a positive electrode for a lithium-ion battery, the positive electrode current collector is an aluminum foil.

In some embodiments, the current collector has two opposite surfaces in its thickness direction, and the electrode active material layer may be disposed on one surface of the current collector or on both surfaces simultaneously. For example, the current collector has two opposite surfaces in its thickness direction, and the negative electrode active material layer is disposed on either one or both of these opposite surfaces.

In some embodiments, the electrode active material may be a positive electrode active material or negative electrode active material commonly used in the field, with no particular restriction on its specific type.

For example, the positive electrode active material may include one or more of lithium transition metal oxide, olivine-structured lithium-containing phosphate, and their respective modified compounds. The modified compounds of the aforementioned positive electrode active materials may involve doping modification, surface coating modification, or both doping and surface coating modification. As an example, the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. As an example, the olivine-structured lithium-containing phosphate may include one or more of lithium iron phosphate, a composite of lithium iron phosphate and carbon, lithium manganese phosphate, a composite of lithium manganese phosphate and carbon, lithium manganese iron phosphate, a composite of lithium manganese iron phosphate and carbon, and their modified compounds. These positive electrode active materials may be used individually or in combinations of two or more.

The negative electrode active material may include one or more of a carbonaceous material, a metal compound capable of alloying with lithium, metal oxide capable of being doped with lithium or metal oxide that is not doped with lithium, and a composite containing a metal compound and a carbonaceous material. As an example, the carbonaceous material may include one or more of artificial graphite, natural graphite, graphitized carbon fiber, and amorphous carbon; the metal compound capable of alloying with lithium may include one or more of silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, and an Al alloy; the metal oxide capable of being doped with lithium and metal oxide that is not doped with lithium may include one or more of SiOv (0 < v < 2), SnO₂, vanadium oxide, and lithium vanadium oxide; and the composite containing a metal compound and a carbonaceous material may include a SiC composite and/or a Sn-C composite. These negative electrode active materials may be used individually or in combinations of two or more.

In some embodiments, the electrode active material layer, in mass percentage, may further include 0.5% to 3% of a binder. For example, the mass percentage of the binder in the electrode active material layer may be 0.5%, 1%, 1.5%, 2%, 2.5%, 3%, or within a range formed by any of the aforementioned values.

In some of the aforementioned embodiments, to ensure adhesion between particles of the electrode active material or between the electrode active material and the current collector, 0.5% to 3% of a binder is further added to the electrode active material layer. Although the conductive network formed by the conductive agent in the technical solution of the present application can enhance the adhesion of the electrode active material layer to some extent, meeting adhesion requirements with only the conductive agent would require an excessive amount of the conductive agent, which could adversely affect the electrode. Moreover, the cost of the conductive agent is relatively higher than that of the binder. Therefore, the amount of conductive agent added can be based on the standard for forming a stable conductive network, with additional binder added to meet the adhesion requirements of the electrode.

A common binder used in the art may be employed, with no particular restriction on its type. For example, the binder may include one or more of polyvinylidene fluoride-hexafluoropropylene copolymer, polyvinyl alcohol, polyacrylonitrile, starch, hydroxypropyl cellulose, regenerated cellulose, polyvinylpyrrolidone, tetrafluoroethylene, polyethylene, polypropylene, ethylenepropylene-diene monomer (EPDM), sulfonated EPDM, carboxymethyl cellulose, styrene-butadiene rubber, fluororubber, and various copolymers thereof. These binders may be used individually or in combinations of two or more.

In some embodiments, a weight-average molecular weight Mw of the binder may range from 700,000 to 2,800,000. For example, the weight-average molecular weight Mw of the binder may be 700,000, 800,000, 900,000, 1,000,000, 1,100,000, 1,200,000, 1,300,000, 1,400,000, 1,600,000, 1,800,000, 2,000,000, 2,200,000, 2,400,000, 2,600,000, 2,800,000, or within a range formed by any of the aforementioned values.

In some of the aforementioned embodiments, the type of binder is not restricted and may include one or more of the binders listed above, with the weight-average molecular weight further specified. If the weight-average molecular weight of the binder is too low, its viscosity is relatively low, which is not conducive to improving adhesion performance of the binder. However, if the weight-average molecular weight of the binder is too high, the binder becomes difficult to dissolve, complicating processing and similarly hindering adhesion performance improvement of the binder. Additionally, in the present application, the role of the conductive network formed by the conductive agent must be considered. In some embodiments, the weight-average molecular weight of the binder should not be excessively high. Balancing these factors, controlling the weight-average molecular weight Mw of the binder between 700,000 and 2,800,000 results in a binder with good adhesion, allowing a relative reduction in the amount of binder added, thereby improving the ionic conductivity of the electrode. Further preferably, the weight-average molecular weight Mw of the binder may range from 1,100,000 to 2,200,000.

It should be noted that, in the present application, the weight-average molecular weight Mw of the binder has a meaning well-known in the art, representing the molecular weight of the binder statistically weighted by mass. The weight-average molecular weight Mw of the binder can be measured using methods and instruments known in the art, such as gel permeation chromatography (GPC).

In some embodiments, a number-average molecular weight Mn of the binder and the weight-average molecular weight Mw of the binder may satisfy: 1.5 ≤ Mw/Mn ≤ 3. For example, Mw/Mn may be 1.6, 1.7, 1.8, 1.9, 2.1, 2.2, 2.3, 2.4, 2.5, 2.6, 2.7, 2.8, 2.9, 3, or within a range formed by any of the aforementioned values.

In some of the aforementioned embodiments, the relationship between the number-average molecular weight Mn and the weight-average molecular weight Mw of the binder is further specified. The value of Mw/Mn indicates the molecular weight distribution of the binder: a larger value suggests a broader distribution, while a smaller value indicates a narrower distribution. Specifically, if Mw/Mn is too large, it implies that the binder contains some molecules with excessively high molecular weights and others with excessively low molecular weights. High molecular weight binder molecules are difficult to dissolve, while low molecular weight binder molecules tend to agglomerate in the electrode active material slurry, both of which are detrimental to adhesion performance of the binder; if Mw/Mn is too small, it indicates a relatively uniform molecular weight distribution of the binder. However, to reduce the amount of binder added, a higher molecular weight is generally preferred. If the molecular weights are too uniform without lower molecular weight binder molecules, it can lead to excessively high viscosity in the electrode active material slurry under the combined action of the conductive agent and binder, making dispersion and coating difficult and affecting processability. Additionally, after coating and drying, during cold pressing, the strong adhesion of the high molecular weight binder causes significant interparticle forces, preventing effective sliding. At high compacted densities, this can damage the current collector or even cause the electrode to become brittle and break. Thus, controlling Mw/Mn within the range of 1.5 to 3 ensures adhesion performance while allowing low molecular weight binder molecules to improve the processability of the electrode active material slurry. This also enables relative sliding of particles in the dried electrode, increasing the compacted density of the electrode and reducing its thickness at the same areal density. Furthermore, low molecular weight binder molecules enhance electrolyte wettability, improving ionic conductivity and the rate performance of the battery cell. Further preferably, the number-average molecular weight Mn and the weight-average molecular weight Mw of the binder may satisfy: 2.1 ≤ Mw/Mn ≤ 2.4.

It should be noted that, in the present application, the number-average molecular weight Mn of the binder has a meaning well-known in the art, representing the molecular weight of the binder statistically weighted by number. The number-average molecular weight Mn of the binder can be measured using methods and instruments known in the art, such as gel permeation chromatography (GPC).

In some embodiments, the electrode active material layer, in mass percentage, may include 0.2% to 2% of the conductive agent, 0.5% to 1.5% of the binder, and 96.5% to 99.3% of the electrode active material.

In some of the aforementioned embodiments, the mass percentages of the conductive agent, binder, and electrode active material in the electrode active material layer are further specified. Using the aforementioned conductive agent, only a small amount is needed to form a stable conductive network, ensuring good electrical conductivity for the electrode. Additionally, the presence of the conductive network allows a relative reduction in the amount of binder used. Furthermore, using a binder that satisfies the aforementioned weight-average and number-average molecular weights, with a combination of high and low molecular weights, provides good adhesion while maintaining excellent processability of the electrode active material slurry and the electrode, further reducing the amount of binder used. As a result, the mass percentages of the conductive agent and binder in the electrode active material layer can be kept at relatively low levels, further increasing the energy density of the electrode. Simultaneously, reducing the amount of binder increases ion transport pathways, reducing electrode polarization. Therefore, in some embodiments of the present application, when the mass percentages of the components in the electrode active material layer are controlled within the above ranges, the electrode exhibits good rate performance. Further preferably, the electrode active material layer, in mass percentage, may include 0.5% to 1% of the conductive agent, 0.7% to 1.3% of the binder, and 97.7% to 98.8% of the electrode active material. Further optimizing the content of each component ensures the electrical conductivity and ionic conductivity of the electrode while maximizing the energy density of the electrode.

In some embodiments, a melting point T₁ of the binder may range from 160°C to 185°C; and/or a thermal decomposition temperature T₂ of the binder may range from 460°C to 495°C.

In some of the aforementioned embodiments, a binder satisfying the aforementioned weight-average and number-average molecular weights has an appropriate melting point and thermal decomposition temperature at the same time, providing good stability and ensuring the electrode remains stable during processing or use. Further preferably, the melting point T₁ of the binder may range from 172°C to 180°C; and/or the thermal decomposition temperature T2 of the binder may range from 480°C to 490°C.

In the present application, the melting point T₁ and thermal decomposition temperature T₂ of the binder have meanings well-known in the art and can be measured using methods and instruments known in the art.

In some embodiments, a compacted density P.D of the electrode active material layer may range from 3.8 mg/cm³ to 4.3 mg/cm³.

In some of the aforementioned embodiments, the compacted density P.D of the electrode active material layer has a meaning well-known in the art and can be measured using methods and instruments known in the art. The compacted density of the electrode active material layer is closely related to the energy density of the electrode and is calculated as the areal density of the electrode active material layer divided by its thickness. Thus, at a given areal density, increasing the compacted density can reduce the thickness of the electrode active material layer, shortening the ion transport distance and improving ionic conductivity. However, if the compacted density is too high, the electrolyte does not easily wet the electrode, preventing the formation of complete ion pathways and reducing ionic conductivity. By using the aforementioned conductive agent and binder-where the conductive agent not only ensures electrical conductivity of the electrode but also reduces the amount of binder needed, and the binder with a mix of high and low molecular weights allows further increases in compacted density while ensuring complete ion pathways-the compacted density P.D of the electrode active material layer, when controlled between 3.8 mg/cm³ and 4.3 mg/cm³, results in good electrical conductivity and ionic conductivity for the electrode. Further preferably, a compacted density P.D of the electrode active material layer may range from 3.95 mg/cm³ to 4.15 mg/cm³.

In some embodiments, Dv99 of the electrode active material and the thickness H of the electrode active material layer may satisfy 0.6 ≤ H/Dv99 ≤ 3. For example, H/Dv99 may be 0.6, 0.7, 0.8, 0.9, 1.0, 1.1, 1.2, 1.3, 1.4, 1.5, 1.6, 1.7, 1.8, 1.9, 2.0, 2.1, 2.3, 2.4, 2.5, 2.6, 2.7, 2.8, 2.9, 3, or within a range formed by any of the aforementioned values.

In the present application, Dv99 of the electrode active material has a meaning well-known in the art, indicating that for the electrode active material, 99% of the particles in a volume-based particle size distribution are smaller than this value. Dv99 of the electrode active material can be measured using methods and instruments known in the art, such as the laser diffraction method for particle size distribution per GB/T 19077-2016, using a laser particle size analyzer (for example, Malvern Mastersizer 2000E, UK).

In some of the aforementioned embodiments, the relationship between the thickness of the electrode active material layer and the maximum particle size of the electrode active material is specifically defined. If the H/Dv99 value is too small, the electrode becomes difficult to process, and during cold pressing, some electrode active material particles may crack, affecting the integrity of the conductive network in the electrode and adversely impacting its electrical conductivity. If the H/Dv99 value is too large, in other words, the particle size of the electrode active material is relatively small, the electrode active material particles become too tightly packed after cold pressing. During charging and discharging, as the volume of the electrode active material changes, it becomes difficult to form stable ion pathways, reducing the rate performance of the electrode. Thus, controlling H/Dv99 between 0.6 and 3 ensures the electrode exhibits good electrical conductivity and ionic conductivity. Further preferably, Dv99 of the electrode active material and the thickness H of the electrode active material layer may satisfy 1 ≤ H/Dv99 ≤ 1.8.

### Method for manufacturing an electrode

The present application also provides a method for manufacturing an electrode, which may include the following steps:
S10: Prepare dispersions of carbon nanotube clusters and discrete carbon nanotubes;
S20: Add the dispersion of carbon nanotube clusters, the dispersion of discrete carbon nanotubes, and an electrode active material to a solvent to form an electrode active material slurry.

### [Preparation of carbon nanotube dispersions]

In some embodiments, step S10 may specifically include:
S11: Add a conventional carbon nanotube raw material and a dispersant to a dispersion medium to obtain a mixed solution;
S12: Apply shear force to the mixed solution to disperse the conventional carbon nanotube raw material, thereby obtaining a dispersion of carbon nanotube clusters.

In some embodiments, in step S11, the dispersion medium may include one or more of dimethylformamide (DMF), diethylformamide, dimethylacetamide (DMAc), N-methylpyrrolidone (NMP), and alcohols such as methanol, ethanol, 1-propanol, 2-propanol (isopropanol), 1-butanol (n-butanol), 2-methyl-1-propanol (isobutanol), 2-butanol (sec-butanol), 1-methyl-2-propanol (tert-butanol), pentanol, hexanol, heptanol, and octanol; glycols such as ethylene glycol, diethylene glycol, triethylene glycol, propylene glycol, 1,3-propanediol, 1,3-butanediol, 1,5-pentanediol, and hexanediol; and glycerol, trimethylolpropane, pentaerythritol, sorbitol, ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, tetraethylene glycol monobutyl ether, acetone, methyl ethyl ketone, methyl propyl ketone, cyclopentanone, ethyl acetate, γ-butyrolactone, and ε-caprolactone. These dispersion media may be used individually or in combinations of two or more. As an example, the dispersion medium may be N-methylpyrrolidone (NMP). The conventional carbon nanotube raw material and carbon nanotube clusters exhibit good dispersibility in the aforementioned dispersion media.

In some embodiments, in step S11, the dispersant may include one or more of hydrogenated nitrile butadiene rubber, polyvinylidene fluoride, and carboxymethyl cellulose. As an example, the dispersant may be hydrogenated nitrile butadiene rubber. The dispersant enhances the dispersion stability of the conventional carbon nanotube raw material and carbon nanotube clusters in the dispersion medium.

In some embodiments, in step S11, the conventional carbon nanotube raw material may be a bonded body or aggregate of carbon nanotube units. As an example, the conventional carbon nanotube raw material may be an aggregate of multi-walled carbon nanotube units.

In some embodiments, in step S11, the mass percentage of the conventional carbon nanotube raw material in the mixed solution may range from 1% to 4%. Under these conditions, the conventional carbon nanotube raw material disperses in the mixed solution at an appropriate level, forming carbon nanotube clusters of suitable specifications. As an example, the mass percentage of the conventional carbon nanotube raw material in the mixed solution may be 1.5%.

In some embodiments, in step S11, the mass ratio of the conventional carbon nanotube raw material to the dispersant may range from 1:0.1 to 10. Under these conditions, the conventional carbon nanotube raw material disperses in the mixed solution at an appropriate level, forming carbon nanotube clusters of suitable specifications while improving the dispersion stability of the carbon nanotube clusters. As an example, the mass ratio of the conventional carbon nanotube raw material to the dispersant may be 1:2.

In some embodiments, in step S11, the solid content of the mixed solution ranges from 1.5 wt% to 20 wt%. Under these conditions, the conventional carbon nanotube raw material disperses in the mixed solution at an appropriate level, forming carbon nanotube clusters of suitable specifications while improving the dispersion stability of the carbon nanotube clusters.

In some embodiments, in step S12, shear force may be applied to the mixed solution using a mixing device such as a homogenizer, bead mill, ball mill, sand mill, basket mill, attritor, universal mixer, clear mixer, spike mill, or TK mixer, or an ultrasonic dispersion device, to disperse the conventional carbon nanotube raw material and obtain a dispersion of carbon nanotube clusters. In particular, the ball milling method allows control over the diameter of the carbon nanotube clusters, thereby obtaining carbon nanotube clusters that meet the requirements of any embodiment of the first aspect of the present application.

In some embodiments, step S12 may specifically include: adding the mixed solution to a container containing milling balls and rotating the container to obtain a dispersion of carbon nanotube clusters,
where the average diameter of the milling balls may range from 0.5 mm to 2.5 mm, the rotation speed of the container may range from 500 rpm to 6000 rpm, and the ball milling duration may range from 0.5 h to 2 h. Under these conditions, the structure of the carbon nanotube units remains intact while the diameter of the carbon nanotube clusters can be appropriately controlled. The ball milling duration refers to the total time of ball milling; for example, if multiple ball milling sessions are performed, the duration is the sum of all sessions.

The above ball milling conditions are used to appropriately disperse the conventional carbon nanotube raw material, specifically excluding conditions that would disperse the conventional carbon nanotube raw material into carbon nanotube clusters with a diameter of 0.2 µm or less or into single-chain carbon nanotubes. In other words, the ball milling conditions are designed to appropriately disperse the conventional carbon nanotube raw material to form carbon nanotube clusters where carbon nanotube units are bonded side-by-side, resulting in a diameter greater than 0.2 µm. This can only be achieved by strictly controlling the composition of the mixed solution, the conditions of the dispersion process, and other factors.

It should be noted that the average diameter of the carbon nanotube clusters is primarily controlled by the average diameter of the milling balls, the rotation speed, and the ball milling duration. Generally, appropriately increasing the diameter of the milling balls while reducing the rotation speed and ball milling duration increases the average diameter of the carbon nanotube clusters, provided the conventional carbon nanotube raw material is successfully dispersed into carbon nanotube clusters. Additionally, the average length of the carbon nanotube clusters is primarily determined by the length of the carbon nanotube units in the conventional carbon nanotube raw material. Those skilled in the art can make corresponding selections and adjustments as needed.

### [Preparation of dispersion of discrete carbon nanotubes]

After preparing a mixed solution containing the conventional carbon nanotube raw material, dispersion medium, and dispersant as described in some embodiments of the first aspect, shear force may be applied to the mixed solution using a mixing device such as a homogenizer, bead mill, ball mill, sand mill, basket mill, attritor, universal mixer, clear mixer, spike mill, or TK mixer, or an ultrasonic dispersion device, to disperse the conventional carbon nanotube raw material and obtain a dispersion of discrete carbon nanotubes. The dispersion medium and dispersant may be the same as those used in the preparation of the dispersion of carbon nanotube clusters described above, and thus are not repeatedly described here.

In some embodiments, in step S20, the electrode active material slurry may further include a third conductive agent and/or a binder. It should be noted that the electrode active material, third conductive agent, and binder may be selected according to some embodiments of the first aspect. When a third conductive agent is added, the third conductive agent may be selected from carbon black and/or graphene, and step S10 further includes preparing a dispersion of carbon black or graphene.

### [Preparation of dispersion of carbon black]

After preparing a mixed solution containing the carbon black raw material, dispersion medium, and dispersant as described in some embodiments of the first aspect, shear force may be applied to the mixed solution using a mixing device such as a homogenizer, bead mill, ball mill, sand mill, basket mill, attritor, universal mixer, clear mixer, spike mill, or TK mixer, or an ultrasonic dispersion device, to disperse the carbon black raw material and obtain a dispersion of carbon black. The dispersion medium and dispersant may be the same as those used in the preparation of the dispersion of carbon nanotube clusters described above, and thus are not repeatedly described here.

### [Preparation of graphene]

After preparing a mixed solution containing the graphene raw material, dispersion medium, and dispersant as described in some embodiments of the first aspect, shear force may be applied to the mixed solution using a mixing device such as a homogenizer, bead mill, ball mill, sand mill, basket mill, attritor, universal mixer, clear mixer, spike mill, or TK mixer, or an ultrasonic dispersion device, to disperse the graphene raw material and obtain a dispersion of graphene. The dispersion medium and dispersant may be the same as those used in the preparation of the dispersion of carbon nanotube clusters described above, and thus are not repeatedly described here.

The solvent may include one or more of dimethylformamide (DMF), diethylformamide, dimethylacetamide (DMAc), N-methylpyrrolidone (NMP), and alcohols such as methanol, ethanol, 1-propanol, 2-propanol (isopropanol), 1-butanol (n-butanol), 2-methyl-1-propanol (isobutanol), 2-butanol (sec-butanol), 1-methyl-2-propanol (tert-butanol), pentanol, hexanol, heptanol, and octanol; glycols such as ethylene glycol, diethylene glycol, triethylene glycol, propylene glycol, 1,3-propanediol, 1,3-butanediol, 1,5-pentanediol, and hexanediol; and glycerol, trimethylolpropane, pentaerythritol, sorbitol, ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, tetraethylene glycol monobutyl ether, acetone, methyl ethyl ketone, methyl propyl ketone, cyclopentanone, ethyl acetate, γ-butyrolactone, and ε-caprolactone. These binders may be used individually or in combinations of two or more. The solvent may be the same as or different from the dispersion medium. As an example, the solvent may be N-methylpyrrolidone (NMP).

In some embodiments, the solid content of the electrode active material slurry ranges from 50 wt% to 80 wt%.

The method for manufacturing the electrode may further include: drying the electrode active material slurry to obtain an electrode active material layer. Specifically, the electrode active material layer may be formed by applying the electrode active material slurry onto a current collector and then drying the coated current collector, or by casting the electrode active material slurry onto a separate carrier and laminating the film separated from the carrier onto a current collector. Further, the areal density of the electrode active material layer is adjusted by controlling the amount of electrode active material slurry applied onto the current collector.

If necessary, after forming the electrode active material layer by the above methods, a rolling process may be further performed. In this case, considering the physical properties of the final electrode, such as the thickness of the active material layer in the electrode, drying and rolling may be performed under appropriate conditions without particular limitation.

### Secondary battery

A second aspect of the present application provides a secondary battery including: a positive electrode, a negative electrode, a separator, and an electrolyte;
where at least one of the positive electrode or the negative electrode is an electrode according to any embodiment of the first aspect.

In the technical solution of the present application, at least one of the positive electrode or the negative electrode of the secondary battery is an electrode according to any embodiment of the first aspect. Embodiments of the electrode have been described and explained in detail above, and thus are not repeated here. It can be understood that the secondary battery of the present application can achieve the beneficial effects of any embodiment of the electrode described above.

In some embodiments, the positive electrode is an electrode according to any embodiment of the first aspect.

In some of the aforementioned embodiments, an electrode according to any embodiment of the first aspect is used as the positive electrode. This is because, in the prior art, the negative electrode active material currently widely used is graphite, which inherently has good electrical conductivity. In comparison, using the electrode of the first aspect as the positive electrode is more practically significant. However, the present application is not limited to its use in the positive electrode. When used as a negative electrode with graphite as the electrode active material, the electrode still exhibits the beneficial effects of the first aspect. Additionally, for non-graphite negative electrodes, such as silicon-based negative electrode active materials, the electrode provided by the present application also shows promising application prospects as a negative electrode.

It should also be noted that increasing the energy density of a battery cell is not solely about increasing the energy density of a single electrode. When a thick electrode is used as the positive electrode of the battery cell, the capacity of the negative electrode needs to be adaptively increased, which is well-known to those skilled in the art.

### [Separator]

The separator is disposed between the positive electrode and the negative electrode, primarily serving to prevent short-circuiting between the positive and negative electrodes while allowing active ions to pass through. The present application imposes no particular limitation on the type of separator, and any well-known porous separator with good chemical and mechanical stability may be used.

In some embodiments, the material of the separator may be selected from one or more of glass fiber, non-woven fabric, polyethylene, polypropylene, and polyvinylidene fluoride, but is not limited to these. Optionally, the material of the separator may include polyethylene and/or polypropylene. The separator may be a single-layer film or a multilayer composite film. When the separator is a multilayer composite film, all layers may be made of the same or different materials. In some embodiments, the separator may further include a ceramic coating or a metal oxide coating.

### [Electrolyte]

The electrolyte serves to conduct active ions between the positive electrode and the negative electrode. Electrolytes usable in the secondary battery of the present application may be those known in the prior art.

In some embodiments, the electrolyte may include an organic solvent, an electrolyte salt, and optional additives. The types of organic solvent, lithium salt, and additives are not specifically limited and may be selected according to needs.

In some embodiments, where the electrochemical device is a lithium-ion battery, the electrolyte salt may include a lithium salt. As an example, the lithium salt includes, but is not limited to, at least one of LiPF₆ (lithium hexafluorophosphate), LiBF₆ (lithium tetrafluoroborate), LiClO₄ (lithium perchlorate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluoro(oxalato)borate), LiBOB (lithium bis(oxalato)borate), LiPO₂F₂ (lithium difluorophosphate), LiDFOP (lithium difluorobis(oxalato)phosphate), or LiTFOP (lithium tetrafluoro(oxalato)phosphate). The above lithium salts may be used individually or in combinations of two or more.

In some embodiments, the electrochemical apparatus is a sodium-ion battery, and the electrolyte salt may include a sodium salt. As an example, the sodium salt may be selected from at least one of NaPF₆, NaClO₄, NaBCl₄, NaSO₃CF₃, or Na(CH₃)C₆H₄SO₃-

In some embodiments, as an example, the organic solvent includes, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), or diethyl sulfone (ESE). The above organic solvents may be used individually or in combinations of two or more. Optionally, the above organic solvents may be used in combinations of two or more.

In some embodiments, the additive may include a negative electrode film-forming additive, a positive electrode film-forming additive, or an additive that can improve some performance of the battery, for example, an additive for improving overcharge performance of the battery, an additive for improving high-temperature performance of the battery, and an additive for improving low-temperature performance of the battery.

As an example, the additive includes, but is not limited to, at least one of fluoroethylene carbonate (FEC), vinylene carbonate (VC), vinyl ethylene carbonate (VEC), ethylene sulfate (DTD), propylene sulfate, ethylene sulfite (ES), 1,3-propane sultone (PS), 1,3-propenesultone (PST), sulfonate cyclic quaternary ammonium salts, succinic anhydride, succinonitrile (SN), adiponitrile (AND), tris(trimethylsilyl) phosphate (TMSP), or tris(trimethylsilyl) borate (TMSB).

The electrolyte may be prepared according to conventional methods in the art. For example, the organic solvent, electrolyte salt, and optional additives may be mixed uniformly to obtain the electrolyte. There is no particular limitation on the order of addition of the materials. For instance, the electrolyte salt and optional additives may be added to the organic solvent and mixed uniformly to obtain the electrolyte; alternatively, the electrolyte salt may first be added to the organic solvent, followed by the addition of optional additives, and then the mixture is mixed uniformly to obtain the electrolyte.

### Electric device

A third aspect of the present application provides an electric device including the secondary battery of the second aspect of the present application.

The electric device of the present application is not particularly limited and may be any electric device known in the prior art. In some embodiments, the electric device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

The following describes examples of the present application. The examples described below are illustrative and only used for explaining the present application, and cannot be construed as limitations on the present application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Preparation of dispersion of carbon nanotube clusters

A conventional multi-walled carbon nanotube raw material, composed of multi-walled carbon nanotube units with an average diameter of 3 nm or more and an average length of 3 µm or more, and hydrogenated nitrile butadiene rubber were mixed in NMP to obtain a mixed solution, where the solid content of the mixed solution ranged from 1.5 wt% to 20 wt%, and the mass ratio of the conventional multi-walled carbon nanotube raw material to hydrogenated nitrile butadiene rubber ranged from 1:0.1 to 10.

The mixed solution was added to a container containing milling balls, and the container was rotated to obtain a dispersion of carbon nanotube clusters, where the average diameter of the milling balls ranged from 0.5 mm to 2.5 mm, the rotation speed of the container ranged from 500 rpm to 6000 rpm, and the ball milling duration ranged from 0.5 h to 2 h.

Dispersions of carbon nanotube clusters with different specifications were obtained and set aside by controlling the specifications of the conventional multi-walled carbon nanotube raw material and the ball milling conditions.

### Preparation of dispersion of discrete carbon nanotubes

A discrete carbon nanotube raw material, composed of multi-walled carbon nanotube units with an average diameter ranging from 10 nm to 35 nm and an average length ranging from 0.7 µm to 4 µm, and polyvinylidene fluoride were mixed in NMP to obtain a mixed solution, where the solid content of the mixed solution ranged from 1.5 wt% to 20 wt%, and the mass ratio of the discrete carbon nanotube raw material to polyvinylidene fluoride ranged from 1:0.1 to 10.

The mixed solution was added to a container containing milling balls, and the container was rotated to obtain a dispersion of discrete carbon nanotubes, where the average diameter of the milling balls ranged from 0.5 mm to 2.5 mm, the rotation speed of the container ranged from 500 rpm to 6000 rpm, and the ball milling duration ranged from 0.5 h to 2 h.

Dispersions of discrete carbon nanotubes with different specifications were obtained and set aside by controlling the specifications of the discrete carbon nanotube raw material and the ball milling conditions.

Preparation of dispersion of carbon black: A carbon black powder with an average diameter of 40 nm and a specific surface area of 62 m²/g and polyvinylidene fluoride were mixed in NMP to obtain a mixed solution, where the solid content of the mixed solution ranged from 1.5 wt% to 20 wt%, and the mass ratio of the conventional carbon black powder raw material to polyvinylidene fluoride ranged from 1:0.1 to 10.

The mixed solution was added to a container containing milling balls, and the container was rotated to obtain a dispersion of carbon black, where the average diameter of the milling balls ranged from 0.5 mm to 2.5 mm, the rotation speed of the container ranged from 500 rpm to 6000 rpm, and the ball milling duration ranged from 0.5 h to 2 h.

Dispersions of carbon black with different specifications were obtained and set aside by controlling the specifications of the conventional carbon black raw material and the ball milling conditions.

Preparation of dispersion of graphene: Graphene with an average flake diameter ranging from 5 µm to 15 µm and 7 to 20 layers and polyvinylidene fluoride were mixed in NMP to obtain a mixed solution, where the solid content of the mixed solution ranged from 1.5 wt% to 20 wt%, and the mass ratio of the conventional graphene raw material to polyvinylidene fluoride ranged from 1:0.1 to 10.

The mixed solution was added to a container containing milling balls, and the container was rotated to obtain a dispersion of graphene, where the average diameter of the milling balls ranged from 0.5 mm to 2.5 mm, the rotation speed of the container ranged from 500 rpm to 6000 rpm, and the ball milling duration ranged from 0.5 h to 2 h.

Dispersions of graphene with different specifications were obtained and set aside by controlling the specifications of the graphene and the ball milling conditions.

### Lithium-ion battery rate performance test

### Test method for charging time to 100% SOC

At an ambient temperature of (25 ± 3)°C, batteries were charged at a constant current with different rates (1.0C, 1.5C, 3C, 6C, 10C) until the voltage reached a set value (for a positive electrode active material of LCO, the voltages were 4.5 V, 4.52 V, 4.53 V, 4.55 V, or 4.58 V), then switched to constant voltage charging until the cutoff current reached 0.05C, achieving a battery state of 100% SOC. The time taken to reach this state was recorded as the 100% SOC full charge time.

### Test method for 1C discharge capacity retention rate (1C DC Ratio)

At an ambient temperature of (25 ± 3)°C, the battery was first charged at a constant current of 0.5C until the voltage reached a set value (for a positive electrode active material of LCO, the voltages were 4.5 V, 4.52 V, 4.53 V, 4.55 V, or 4.58 V), then switched to constant voltage charging until the cutoff current reached 0.025C, and left to stand for 30 minutes. The battery was discharged at a 0.2C rate until the voltage reached a set value (for a positive electrode active material of LCO, the voltage was 3.0 V), with the discharge capacity recorded as D0. After standing for 5 minutes, the battery was charged at a constant current of 0.5C until the voltage reached the set value (for a positive electrode active material of LCO, the voltages were 4.5 V, 4.52 V, 4.53 V, 4.55 V, or 4.58 V), then switched to constant voltage charging until the cutoff current reached 0.025C, and left to stand for 30 minutes. The battery was then discharged at a 1.0C rate until the voltage reached the set value (for a positive electrode active material of LCO, the voltage was 3.0 V), with the discharge capacity recorded as D1. The 1C discharge capacity retention rate (1C DC ratio) was calculated as D1/D0 × 100%.

### Example 1

### Preparation of positive electrode:

A positive electrode active material, a conductive agent, and a binder in a mass ratio of 98.1:0.8:1.1 were mixed in NMP to obtain a positive electrode active slurry, where the positive electrode active material was lithium cobalt oxide (LCO) with a Dv99 of 38 µm, the conductive agent was a mixture of carbon nanotube clusters and discrete carbon nanotubes in a mass ratio of 1:0.2, the solid content of the positive electrode active slurry was 72 wt%, the average diameter D and average length L of the carbon nanotube clusters, and the average diameter d of the carbon nanotube cluster units in the carbon nanotube clusters are as shown in Table 1, and the binder was polyvinylidene fluoride with a weight-average molecular weight Mw of 220, a molecular weight distribution Mw/Mn of 2.2, a melting point of 176.1°C, and a thermal decomposition temperature of 482°C. The positive electrode active slurry was coated onto an aluminum foil, which was dried at 95°C, subjected to cold pressing, trimming, and slitting, and then dried under vacuum at 85°C for 4 hours to obtain a positive electrode with an areal density C.W₁, thickness H₁, and compacted density P.D of the positive electrode active material layer as shown in Table 1.

### Preparation of negative electrode

An artificial graphite negative electrode active material, a conductive agent Super P, a thickener sodium carboxymethyl cellulose (CMC), and a binder styrene-butadiene rubber (SBR) in a mass ratio of 96.4:1.5:0.5:1.6 were mixed in deionized water to obtain a negative electrode active slurry, where the solid content of the negative electrode active slurry was 54 wt%. The negative electrode active slurry was coated onto copper foil, which was dried at 85°C, subjected to cold pressing, trimming, and slitting, and then dried under vacuum at 80°C for 12 hours to obtain a negative electrode with an areal density C.W₂ and thickness H₂ of the negative electrode active material layer as shown in Table 1.

Preparation of Electrolyte: A conventional 1.5 mol/L lithium hexafluorophosphate electrolyte was used.

Preparation of separator: A7 µm thick polyethylene (PE) separator substrate coated with a 3 µm ceramic coating was used.

Preparation of lithium-ion battery: The positive electrode, the separator, and the negative electrode were stacked in sequence so that the separator was disposed between the positive electrode plate and the negative electrode plate for separation. Then, the resulting stack was wound to form a jelly roll. After the tabs were welded, the jelly roll was placed in an outer packaging aluminum foil film. The prepared electrolyte was injected into the dried jelly roll, followed by processes such as vacuum packaging, standing, formation (0.02C constant current charging to 3.3V, then 0.1C constant current charging to 3.6V), shaping, capacity testing, and other processes to obtain a pouch lithium-ion battery.

### Examples 2 to 17

Preparation of the positive electrode is similar to Example 1, differing only in the areal density C.W₁, thickness H₁, compacted density P.D, and specifications of the carbon nanotube clusters, as detailed in Table 1.

Preparation of the negative electrode is similar to Example 1, differing only in the areal density C.W₂ and thickness H₂, as detailed in Table 1.

Preparation of the electrolyte, separator, and lithium-ion battery is identical to Example 1.

### Comparative Examples 1 to 10

Preparation of the positive electrode is similar to Example 1, differing only in that the conductive agent was discrete carbon nanotubes, and in the areal density C.W₁, thickness H₁, and compacted density P.D, as detailed in Table 1.

Preparation of the negative electrode is similar to Example 1, differing only in the areal density C.W₂ and thickness H₂, as detailed in Table 1.

Preparation of the electrolyte, separator, and lithium-ion battery is identical to Example 1.

### Performance testing

The lithium-ion batteries obtained from Examples 1 to 17 and Comparative Examples 1 to 10 were subjected to rate performance testing, with results shown in Table 1.

**Table 1**

| | C.W₁ (mg/cm²) | H₁ (µm) | C.W₂ (mg/cm²) | H2 (µm) | L (µm) | D (µm) | d (nm) | P.D (mg/cm³) | H1/Dv99 | Charge rate | 100% SOC charge time (min) | 1C DC ratio (%) |
|---|---|---|---|---|---|---|---|---|---|---|---|---|
| Example 1 | 23.4 | 55.3 | 12.3 | 70.5 | 15 | 1.2 | 10 | 4.23 | 1.46 | 1C | 97.5 | 97.4 |
| Example 2 | 20.78 | 49.1 | 11.23 | 64.2 | 15 | 1.2 | 10 | 4.23 | 1.29 | 1.5C | 82.2 | 97.2 |
| Example 3 | 16.88 | 39.9 | 9.02 | 51.6 | 15 | 1.2 | 10 | 4.23 | 1.05 | 3C | 32.3 | 97.4 |
| Example 4 | 14.28 | 33.8 | 7.66 | 43.8 | 15 | 1.2 | 10 | 4.23 | 0.89 | 6C | 20.2 | 97.8 |
| Example 5 | 12.98 | 31.3 | 6.98 | 39.9 | 15 | 1.2 | 10 | 4.15 | 0.82 | 10C | 14.5 | 97.5 |
| Example 6 | 14.28 | 33.8 | 7.66 | 43.8 | 25 | 1.2 | 10 | 4.23 | 0.89 | 6C | 21.9 | 96.7 |
| Example 7 | 14.28 | 33.8 | 7.66 | 43.8 | 5 | 1.2 | 10 | 4.23 | 0.89 | 6C | 22.4 | 96.4 |
| Example 8 | 14.28 | 33.8 | 7.66 | 43.8 | 15 | 2 | 10 | 4.23 | 0.89 | 6C | 21.7 | 96.6 |
| Example 9 | 14.28 | 33.8 | 7.66 | 43.8 | 15 | 0.5 | 10 | 4.23 | 0.89 | 6C | 22.8 | 96.1 |
| Example 10 | 14.28 | 33.8 | 7.66 | 43.8 | 15 | 1.2 | 6 | 4.23 | 0.89 | 6C | 22.3 | 96.2 |
| Example 11 | 14.28 | 33.8 | 7.66 | 43.8 | 15 | 1.2 | 15 | 4.23 | 0.89 | 6C | 22.9 | 95.9 |
| Example 12 | 14.28 | 32.8 | 7.66 | 43.8 | 15 | 1.2 | 10 | 4.35 | 0.86 | 6C | 24.7 | 93.3 |
| Example 13 | 14.28 | 34.4 | 7.66 | 43.8 | 15 | 1.2 | 10 | 4.15 | 0.91 | 6C | 23.3 | 95.5 |
| Example 14 | 14.28 | 36.2 | 7.66 | 43.8 | 15 | 1.2 | 10 | 3.95 | 0.95 | 6C | 25.2 | 92.4 |
| Example 15 | 14.28 | 33.8 | 7.66 | 43.8 | 35 | 1.2 | 10 | 4.23 | 0.89 | 6C | 25.5 | 94.3 |
| Example 16 | 14.28 | 33.8 | 7.66 | 43.8 | 15 | 0.4 | 10 | 4.23 | 0.89 | 6C | 25.6 | 94.4 |
| Example 17 | 14.28 | 33.8 | 7.66 | 43.8 | 15 | 1.2 | 25 | 4.23 | 0.89 | 6C | 26.2 | 93.9 |
| Comparative Example 1 | 20.78 | 49.1 | 11.23 | 64.2 | / | / | / | 4.23 | 1.29 | 1C | 99.6 | 96.5 |
| Comparative Example 2 | 18.18 | 43 | 9.74 | 55.6 | / | / | / | 4.23 | 1.13 | 1.5C | 84.5 | 96.5 |
| Comparative Example 3 | 14.28 | 33.8 | 7.34 | 41.9 | / | / | / | 4.23 | 0.89 | 3C | 34.5 | 96.3 |
| Comparative Example 4 | 11.69 | 27.6 | 6.3 | 36 | / | / | / | 4.23 | 0.73 | 6C | 23.1 | 96.5 |
| Comparative Example 5 | 10.39 | 25 | 5.65 | 32.5 | / | / | / | 4.15 | 0.66 | 10C | 16.9 | 96.2 |
| Comparative Example 6 | 23.4 | 55.3 | 12.3 | 70.5 | / | / | / | 4.23 | 1.46 | 1C | 105.4 | 91.5 |
| Comparative Example 7 | 20.78 | 49.1 | 11.23 | 64.2 | / | / | / | 4.23 | 1.29 | 1.5C | 89.3 | 91.9 |
| Comparative Example 8 | 16.88 | 39.9 | 9.02 | 51.6 | / | / | / | 4.23 | 1.05 | 3C | 39.2 | 92.4 |
| Comparative Example 9 | 14.28 | 33.8 | 7.66 | 43.8 | / | / | / | 4.23 | 0.89 | 6C | 28.5 | 93.2 |
| Comparative Example 10 | 12.98 | 31.3 | 6.98 | 39.9 | / | / | / | 4.15 | 0.82 | 10C | 21.8 | 93.6 |

| | | | | | | | | | | | | |
|---|---|---|---|---|---|---|---|---|---|---|---|---|
| Note: In Table 1, "/" indicates the absence of the component. | | | | | | | | | | | | |

From the results in Table 1, comparing Examples 1 to 5 with Comparative Examples 1 to 10 shows that, under the same compacted density conditions, lithium-ion batteries containing carbon nanotube clusters as a conductive agent exhibit better rate performance. Particularly compared to Comparative Examples 1 to 5, thick electrodes demonstrate higher charging rates and energy efficiency than thin electrodes. This indicates that using a mixture of carbon nanotube clusters and discrete carbon nanotubes of a certain ratio as a conductive agent can still form a good conductive network even in thick electrodes, enhancing electrolyte wettability and improving the ionic conductivity of the electrode. As a result, thick electrodes achieve higher electrical and ionic conductivity than thin electrodes, increasing energy density without compromising, and even improving, the rate performance of the battery cell.

Comparing Example 4 with Examples 6 to 11 and 15 to 17 shows that the length and diameter of the carbon nanotube clusters, and diameter of the carbon nanotube units in the carbon nanotube clusters within the conductive agent affect the electrical conductivity and ionic conductivity of the electrode to some extent. To achieve better rate performance in battery cells, the specifications of the carbon nanotubes should be controlled within a certain range, with possible reasons described earlier in the text and not repeated here.

Comparing Example 4 with Examples 12 to 14 shows that the compacted density of the electrode affects the rate performance of lithium-ion batteries to some extent. An appropriate compacted density should be selected based on the conductive agent, binder, and electrode active material. Excessively high compacted density hinders ion conduction, while excessively low compacted density increases the ion transport distance. Thus, it is necessary to control the compacted density within a certain range while increasing electrode thickness.

### Examples 18 to 32

Preparation of the positive electrode is similar to Example 4, differing only in the binder being polyvinylidene fluoride with varying weight-average molecular weight Mw, molecular weight distribution Mw/Mn, melting point T₁, and thermal decomposition temperature T₂, as well as different amounts of binder and positive electrode active material in the electrode active material layer, as detailed in Table 2.

Preparation of the negative electrode, electrolyte, separator, and lithium-ion battery is identical to Example 4.

### Performance testing

The lithium-ion batteries obtained from Examples 18 to 32 were subjected to rate performance testing, with results shown in Table 2. For comparison, the results of Example 4 from Table 1 are also included in Table 2.

**Table 2**

| | Mw | Mw/ Mn | T₁ (°C) | T₂ (°C) | Binder mass percentage in positive electrode active material layer (%) | Charge rate | 100% SOC charge time (min) | 1C DC ratio (%) |
|---|---|---|---|---|---|---|---|---|
| Example 18 | 80 | 2.20 | 173.3 | 465 | 1.10 | 6C | 22.3 | 97.0 |
| Example 19 | 110 | 2.20 | 174.1 | 467 | 1.10 | 6C | 21.9 | 97.3 |
| Example 20 | 150 | 2.20 | 174.4 | 469 | 1.10 | 6C | 21.7 | 97.5 |
| Example 21 | 180 | 2.20 | 175.6 | 475 | 1.10 | 6C | 21.1 | 97.6 |
| Example 4 | 220 | 2.20 | 176.1 | 482 | 1.10 | 6C | 20.2 | 97.8 |
| Example 22 | 260 | 2.20 | 176.6 | 487 | 1.10 | 6C | 21.2 | 97.5 |
| Example 23 | 220 | 2.10 | 176.5 | 483 | 1.10 | 6C | 20.8 | 97.7 |
| Example 24 | 220 | 2.35 | 176.3 | 484 | 1.10 | 6C | 21.3 | 97.6 |
| Example 25 | 220 | 2.8 | 176.1 | 489 | 1.10 | 6C | 22.6 | 97.1 |
| Example 26 | 220 | 1.5 | 175.9 | 481 | 1.10 | 6C | 22.9 | 96.9 |
| Example 27 | 220 | 2.20 | 176.1 | 482 | 1.30 | 6C | 23.2 | 96.8 |
| Example 28 | 220 | 2.20 | 176.1 | 482 | 0.90 | 6C | 20.6 | 97.4 |
| Example 29 | 220 | 2.20 | 176.1 | 482 | 0.60 | 6C | 20.7 | 97.5 |
| Example 30 | 60 | 2.2 | 165.3 | 462 | 1.10 | 6C | 24.2 | 94.9 |
| Example 31 | 270 | 3.1 | 176.1 | 482 | 1.10 | 6C | 23.9 | 95.3 |
| Example 32 | 220 | 1.4 | 175.8 | 480 | 1.10 | 6C | 23.7 | 96.2 |

| | | | | | | | | |
|---|---|---|---|---|---|---|---|---|
| Note: Table 2 shows only the mass percentage of the binder in the positive electrode active material layer; the mass percentage of the conductive agent remains constant at 0.8%, with the remainder being the positive electrode active material. | | | | | | | | |

From the results in Table 2, comparing Example 4 with Examples 18 to 26 and 30 to 32 shows that the weight-average molecular weight and molecular weight distribution of the binder affect the rate performance of the battery cell to some extent, with possible reasons analyzed earlier in the text and not repeated here. To achieve good adhesion performance with a lower amount, ensuring strong adhesion between particles of the electrode active material and between the electrode active material layer and the current collector, the weight-average molecular weight and molecular weight distribution should be controlled within a certain range to obtain an electrode with good electrical conductivity and ionic conductivity, thereby improving the rate performance of the battery cell.

Comparing Example 4 with Examples 27 to 29 shows that the binder content has a relatively minor impact on the rate performance of the battery cell. Under the premise of ensuring good adhesion between particles of the electrode active material and between the electrode active material layer and the current collector, the amount of binder can be relatively reduced, but not excessively.

### Example 33

Preparation of the positive electrode is similar to Example 4, differing only in that the conductive agent was a mixture of carbon nanotube clusters, discrete carbon nanotubes, and carbon black in a mass ratio of 1:0.1:0.1.

Preparation of the negative electrode, electrolyte, separator, and lithium-ion battery is identical to Example 4.

### Example 34

Preparation of the positive electrode is similar to Example 4, differing only in that the conductive agent was a mixture of carbon nanotube clusters, discrete carbon nanotubes, and graphene in a mass ratio of 1:0.1:0.1.

Preparation of the negative electrode, electrolyte, separator, and lithium-ion battery is identical to Example 4.

### Examples 35 to 39

Preparation of the positive electrode is similar to Example 4, differing only in the mass percentage of the conductive agent in the positive electrode active material layer, as detailed in Table 3.

Preparation of the negative electrode, electrolyte, separator, and lithium-ion battery is identical to Example 4.

### Comparative Example 11

Preparation of the positive electrode is similar to Example 4, differing only in that the conductive agent was a mixture of discrete carbon nanotubes and carbon black in a mass ratio of 1:1.

Preparation of the negative electrode, electrolyte, separator, and lithium-ion battery is identical to Example 4.

### Comparative Example 12

Preparation of the positive electrode is similar to Example 4, differing only in that the conductive agent was a mixture of discrete carbon nanotubes and graphene in a mass ratio of 1:1.

Preparation of the negative electrode, electrolyte, separator, and lithium-ion battery is identical to Example 4.

### Comparative Example 13

Preparation of the positive electrode is similar to Example 4, differing only in that the conductive agent was a mixture of carbon black and graphene in a mass ratio of 1:1.

Preparation of the negative electrode, electrolyte, separator, and lithium-ion battery is identical to Example 4.

### Performance testing

The lithium-ion batteries obtained from Examples 4, 33 to 39, and Comparative Examples 11 to 13 were subjected to rate performance testing, with results shown in Table 1.

**Table 3**

| | Conductive agent mass percentage in positive electrode active material layer (%) | Charge rate | 100% SOC charge time (min) | 1C DC ratio (%) |
|---|---|---|---|---|
| Example 4 | 0.80 | 6C | 20.2 | 97.80 |
| Example 33 | 0.80 | 6C | 21.8 | 97.2 |
| Example 34 | 0.80 | 6C | 20.1 | 97.9 |
| Example 35 | 1.00 | 6C | 20.4 | 97.7 |
| Example 36 | 1.50 | 6C | 20.7 | 97.6 |
| Example 37 | 2.00 | 6C | 21.4 | 97.9 |
| Example 38 | 0.50 | 6C | 22.3 | 97.2 |
| Example 39 | 0.30 | 6C | 23.6 | 97.1 |
| Example 4 | 0.80 | 1.5C | 82.2 | 97.2 |
| Example 4 | 0.80 | 3C | 32.3 | 97.4 |
| Example 4 | 0.80 | 10C | 14.5 | 97.5 |
| Comparative Example 11 | 0.80 | 6C | 24.5 | 97.0 |
| Comparative Example 12 | 0.80 | 6C | 24.3 | 96.7 |
| Comparative Example 13 | 0.80 | 6C | 24.8 | 96.8 |

| | | | | |
|---|---|---|---|---|
| Note: Table 3 shows only the mass percentage of the conductive agent in the positive electrode active material layer; the mass percentage of the binder remains constant at 1.1%, with the remainder being the positive electrode active material. | | | | |

From the results in Table 3 it can be seen that, the lithium-ion battery obtained in Example 4 exhibits faster charging rates and higher energy efficiency across different charge rates, indicating that the thick electrode prepared using the conductive agent and binder provided by the present invention enhances the energy density of the battery cell while maintaining good rate performance.

Comparing the examples with the comparative examples shows that using a conductive agent containing carbon nanotube clusters results in better electrical conductivity and ionic conductivity of the electrode, leading to faster charging speeds at high charge rates and good energy efficiency.

Comparing Example 4 with Examples 33 and 34 shows that discrete carbon nanotubes have a better microcurrent collection effect than carbon black, facilitating the formation of short-range conductive pathways. When carbon nanotube clusters, discrete carbon nanotubes, and graphene are used together as the conductive agent, the rate performance of the obtained battery cell is optimal, possibly because the addition of graphene further enhances the compactness and stability of the conductive network, improving the electrical conductivity and ionic conductivity of the thick electrode and thus enhancing the rate performance of the battery cell.

Comparing Example 4 with Examples 35 to 39 shows that while a higher amount of conductive agent improves the electrical conductivity of the electrode, excessive amounts may hinder ion conduction, potentially reducing the rate performance of the battery cell. Therefore, under the premise of forming a complete conductive network, appropriately reducing the amount of conductive agent ensures that the thick electrode maintains good electrical conductivity and ionic conductivity.

It should be noted that in absence of conflicts, some embodiments and features in some embodiments in the present application may be combined with each other.

In conclusion, it should be noted that the foregoing embodiments are merely intended for describing the technical solutions of the present application, but not for limiting the present application. Although the present application is described in detail with reference to the foregoing embodiments, persons of ordinary skills in the art should understand that they may still make modifications to the technical solutions described in the foregoing embodiments or make equivalent replacements to some technical features thereof, without departing from the spirit and scope of the technical solutions of embodiments of the present application.

## Claims

1. An electrode comprising: an electrode active material layer, wherein the electrode active material layer has an areal density of 8 mg/cm² to 40 mg/cm², and a thickness H of 25 µm to 80 µm,
the electrode active material layer, in mass percentage, comprises 95% to 99.3% of an electrode active material and 0.2% to 5% of a conductive agent,
wherein the conductive agent comprises carbon nanotube clusters and discrete carbon nanotubes, the carbon nanotube clusters is composed of a plurality of carbon nanotube units arranged in bundles, and the carbon nanotube clusters has a diameter greater than 0.2 µm.

2. The electrode according to claim 1, wherein an average diameter d of the carbon nanotube units satisfies 3 nm ≤ d ≤ 40 nm; and
optionally, the average diameter d of the carbon nanotube units satisfies 5 nm ≤ d ≤ 20 nm.

3. The electrode according to claim 2, wherein the carbon nanotube units are multi-walled carbon nanotube units.

4. The electrode according to claim 1, wherein an average diameter D of the carbon nanotube clusters is ≥ 0.5 µm; and
optionally, the average diameter D of the carbon nanotube clusters satisfies 0.5 µm ≤ D ≤ 3 µm.

5. The electrode according to claim 1, wherein an average length L of the carbon nanotube clusters is ≥ 3 µm;
optionally, the average length L of the carbon nanotube clusters is ≥ 5 µm; and
optionally, the average length L of the carbon nanotube clusters satisfies 5 µm ≤ L ≤ 30 µm.

6. The electrode according to claim 1, wherein a mass ratio of the carbon nanotube clusters to the discrete carbon nanotubes is from 1:0.01 to 1.

7. The electrode according to claim 6, wherein the conductive agent further comprises a third conductive agent, the third conductive agent being selected from carbon black and/or graphene, and a mass ratio of the carbon nanotube clusters to the third conductive agent is from 1:0.01 to 1.

8. The electrode according to claim 1, wherein the electrode active material layer, in mass percentage, further comprises 0.5% to 3% of a binder.

9. The electrode according to claim 8, wherein a weight-average molecular weight Mw of the binder is from 700,000 to 2,800,000; and
optionally, the weight-average molecular weight Mw of the binder is from 1,100,000 to 2,200,000.

10. The electrode according to claim 9, wherein a number-average molecular weight Mn of the binder and the weight-average molecular weight Mw of the binder satisfy: 1.5 ≤ Mw/Mn ≤ 3; and
optionally, the number-average molecular weight Mn of the binder and the weight-average molecular weight Mw of the binder satisfy: 2.1 ≤ Mw/Mn ≤ 2.4.

11. The electrode according to claim 10, wherein the electrode active material layer, in mass percentage, comprises 0.2% to 2% of the conductive agent, 0.5% to 1.5% of the binder, and 96.5% to 99.3% of the electrode active material; and
optionally, the electrode active material layer, in mass percentage, comprises 0.5% to 1% of the conductive agent, 0.7% to 1.3% of the binder, and 97.7% to 98.8% of the electrode active material.

12. The electrode according to claim 10, wherein a melting point T₁ of the binder is from 160°C to 185°C; and/or
a thermal decomposition temperature T₂ of the binder is from 460°C to 495°C; and
optionally, the melting point T₁ of the binder is from 172°C to 180°C; and/or
the thermal decomposition temperature T₂ of the binder is from 480°C to 490°C.

13. The electrode according to any one of claims 1 to 12, wherein a compacted density of the electrode active material layer is from 3.8 mg/cm³ to 4.3 mg/cm³; and
optionally, the compacted density of the electrode active material layer is from 3.95 mg/cm³ to 4.15 mg/cm³.

14. The electrode according to claim 13, wherein Dv99 of the electrode active material and the thickness H of the electrode active material layer satisfy 0.6 ≤ H/Dv99 ≤ 3; and
optionally, the Dv99 of the electrode active material and the thickness H of the electrode active material layer satisfy 1 ≤ H/Dv99 ≤ 1.8.

15. A secondary battery comprising: a positive electrode, a negative electrode, a separator, and an electrolyte;
wherein at least one of the positive electrode or the negative electrode is the electrode according to any one of claims 1 to 14.

16. The secondary battery according to claim 15, wherein the positive electrode is the electrode according to any one of claims 1 to 14.

17. An electric device comprising: the secondary battery according to claim 15 or 16.
